# FASCICULE DE BREVET EUROPEEN

(11) **EP 2 451 557 B1**
(45) Date de publication et mention de la délivrance du brevet: **17.04.2013**
(21) Numéro de dépôt: 10740357.8
(22) Date de dépôt: 09.07.2010
(51) Int. Cl.: B01D 46/24

(54) **STRUCTURE EN NID D'ABEILLE MARQUÉE**
MARKIERTE WABENSTRUKTUR
MARKED HONEYCOMB STRUCTURE

(30) Priorité: 09.07.2009 FR 0954791
(43) Date de publication de la demande: 16.05.2012
(73) Titulaire: Saint-Gobain Centre De Recherches Et D'etudes Europeen, 92400 Courbevoie (FR)
(72) Inventeur: BOUTEILLER, Bernard, F - 13140 Miramas (FR)
(74) Mandataire: Sartorius, Jérome
(86) Numéro de dépôt international: PCT/IB2010/053160
(87) Numéro de publication internationale: WO 2011/004351

(56) Documents cités:
- EP-A- 1 283 067
- WO-A-03/053542
- US-A- 4 420 316
- US-A1- 2009 166 910

## Description

### Domaine technique

L'invention concerne une structure en nid d'abeille, notamment pour la filtration des particules contenues dans les gaz d'échappement des moteurs à combustion interne, en particulier du type Diesel. L'invention concerne également un corps filtrant, monolithique ou assemblé, comportant au moins une structure en nid d'abeille selon l'invention, et un procédé de fabrication d'un tel corps filtrant.

L'invention concerne aussi une filière d'extrusion d'une structure en nid d'abeille selon l'invention et un procédé de fabrication d'une structure en nid d'abeille selon l'invention.

### Arrière-plan technologique

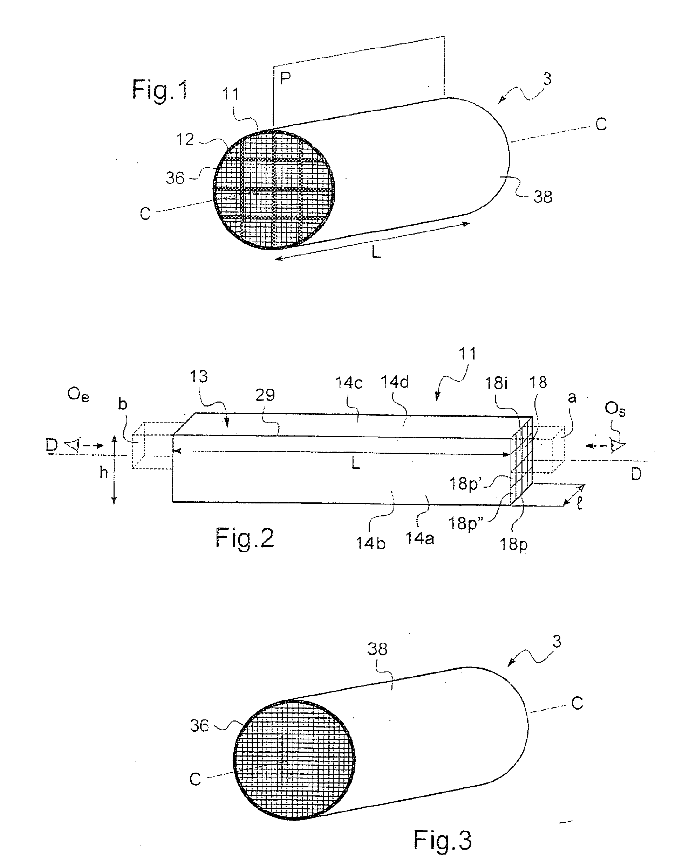

Avant d'être évacués à l'air libre, les gaz d'échappement peuvent être purifiés au moyen d'un corps filtrant tel que ceux représentés sur les figures 1, 3 et 4, connus de la technique antérieure.

Un filtre à particules 1 comporte classiquement au moins un corps filtrant 3, généralement cylindrique d'axe longitudinal C-C, d'une longueur L typiquement comprise entre 10 et 30 cm, inséré dans une enveloppe métallique 5, ou « canning ».

Pour bénéficier d'une bonne résistance thermomécanique, en particulier pendant les phases de régénération, il est avantageux de fabriquer le corps filtrant par assemblage d'une pluralité de blocs filtrants dits "unitaires" 11 au moyen de joints 12, puis usinage. Le corps filtrant est alors un corps filtrant « assemblé », comme représenté sur la figure 1. La figure 2 représente un exemple de bloc filtrant unitaire, d'axe D-D, d'une longueur « L », d'une largeur « I » et d'une hauteur « h ».

Le corps filtrant 3 peut également être monolithique, c'est-à-dire en un seul morceau, sans joint, comme représenté sur la figure 3.

Classiquement, pour fabriquer un bloc filtrant unitaire ou un corps filtrant monolithique, on extrude une matière céramique (cordiérite, carbure de silicium, alumine, mullite, nitrure de silicium, mélange silicium/carbure de silicium, ...) à travers une filière d'extrusion de manière à former une préforme en nid d'abeille.

Pour fabriquer un bloc filtrant unitaire 11, la filière d'extrusion est classiquement conformée pour que la surface latérale 13 de la préforme présente quatre faces latérales 14a-d sensiblement identiques, définissant par exemple une préforme parallélépipédique de section carrée ou rectangulaire voire hexagonale. La largeur " I " d'une face latérale d'une telle préforme est typiquement comprise entre 30 mm et 100 mm.

Pour fabriquer un corps filtrant monolithique, la filière d'extrusion est classiquement conformée pour que la préforme présente la forme d'un cylindre de section circulaire ou ellipsoïdale.

La préforme est ensuite frittée pour former une structure en nid d'abeille.

Une configuration « en nid d'abeille » signifie que la préforme et la structure poreuse comprennent un ensemble de canaux 18, ou « conduits », adjacents de manière à former, en section, un motif en damier.

Les canaux 18, délimités chacun par une paroi latérale 22, sont généralement rectilignes, de section transversale sensiblement carrée, et s'étendent parallèlement les uns aux autres. Dans une section transversale, ils forment ainsi des lignes 19 et des colonnes 20. L'épaisseur des parois latérales peut notamment être comprise entre 180 et 500 µm. La section transversale des canaux peut notamment être comprise entre 0,4 et 9 mm².

Chaque canal de la préforme débouche par une ouverture amont 24e sur une face amont 26e, ou « face d'admission », et par une ouverture aval 24s sur une face aval 26s, ou « face d'évacuation ».

On appelle « motif amont » et « motif aval » les images des faces amont et aval, respectivement, vues selon une direction d'observation perpendiculaire à ces faces. Sur la figure 2, l'observateur Oₑ observe le motif amont et l'observateur Oₛ observe le motif aval.

Lorsque tous les canaux ont la même longueur et que les faces amont et aval sont perpendiculaires à la direction des canaux au niveau des faces amont et aval, et avant bouchage des canaux, les motifs amont et aval correspondent ainsi à la section transversale, c'est-à-dire perpendiculairement à la direction des canaux, au niveau des faces amont et aval, respectivement.

On distingue classiquement des canaux intérieurs 18i et des canaux périphériques 18p.

A la différence des canaux intérieurs 18i, la paroi latérale des canaux périphériques 18p est en partie exposée à l'extérieur de la structure en nid d'abeille. Dans une structure en nid d'abeille présentant des arêtes longitudinales 29, et notamment dans une structure en nid d'abeille parallélépipédique, on distingue, parmi les canaux périphériques 18p, les canaux d'angle 18p" et les canaux latéraux 18p'. Les canaux d'angle 18p" s'étendent le long desdites arêtes longitudinales. Les canaux latéraux 18p' sont, à la différence des canaux d'angle 18p", positionnés le long d'une seule face latérale 14a-d de la structure en nid d'abeille.

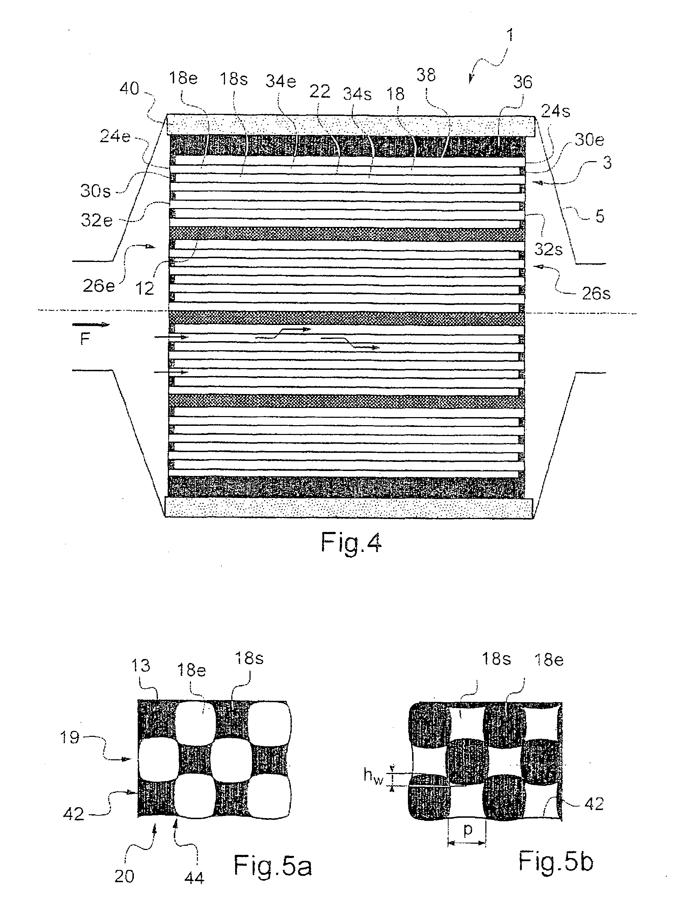

Une structure en nid d'abeille destinée à la fabrication d'un corps filtrant est ensuite alternativement bouchée sur la face amont 24e ou sur la face aval 24s par des bouchons amont 30s et aval 30e, respectivement, comme cela est bien connu, pour former des canaux dits « canaux de sortie » 18s et « canaux d'entrée» 18e, respectivement (voir figure 4). On obtient alors un bloc "filtrant".

A l'extrémité des canaux de sortie 18s et d'entrée 18e opposée aux bouchons amont 30s et aval 30e, respectivement, les canaux de sortie 18s et les canaux d'entrée 18e débouchent vers l'extérieur par les ouvertures aval, dites « ouvertures de sortie 32s », et par les ouvertures amont, dites « ouvertures d'entrée 32e », respectivement, s'étendant sur les faces aval 26s et amont 26e, respectivement.

Ainsi, les canaux d'entrée et de sortie définissent des chambres d'entrée et de sortie 34e et 34s, respectivement, délimitées chacune par une paroi latérale 22, un bouchon d'obturation, et une ouverture débouchant vers l'extérieur. Deux canaux d'entrée et de sortie adjacents sont en communication de fluide par leur paroi latérale commune.

Pour la fabrication d'un corps filtrant assemblé, les blocs filtrants unitaires 11 sont assemblés entre eux par collage au moyen de joints 12 en ciment de joint céramique interposé entre leurs faces adjacentes en regard. Le ciment de joint est généralement constitué de silice et/ou de carbure de silicium et/ou de nitrure d'aluminium. De préférence, le ciment de joint est sensiblement étanche aux gaz d'échappement à filtrer. Le ciment de joint peut présenter une conductivité thermique d'au moins 0,1 W/m.K entre 20°C et 800°C pour limiter les contraintes thermomécaniques. Typiquement, l'épaisseur moyenne d'un joint 12 est comprise entre 0,3 et 4 mm.

Le ciment de joint peut être appliqué sur toute la surface d'une face latérale d'un bloc filtrant unitaire ou sur une partie de cette face latérale seulement. Dans ce dernier cas en particulier, toutes les faces latérales d'un bloc filtrant unitaire ne peuvent pas toujours être assemblées indifféremment à une face latérale quelconque d'un autre bloc filtrant unitaire. Autrement dit, il peut. être nécessaire d'identifier une ou plusieurs des faces latérales des blocs filtrants unitaires pour s'assurer que les faces latérales collées les unes aux autres se correspondent bien. Une marque peut être imprimée à cet effet sur les faces latérales des blocs filtrants unitaires.

L'assemblage ainsi constitué peut être ensuite usiné pour obtenir une forme adaptée à l'enveloppe 5, par exemple, pour fabriquer un corps filtrant cylindrique de section circulaire.

Généralement, un revêtement périphérique 36, encore appelé « revêtement externe » ou « coating » en un ciment de revêtement isolant thermiquement et étanche aux gaz d'échappement est appliqué sur la surface latérale 38 du corps filtrant monolithique ou assemblé.

Le corps filtrant 3, assemblé ou monolithique, peut alors être inséré dans l'enveloppe 5, un joint périphérique 40, étanche aux gaz d'échappement, étant disposé entre la surface latérale 38 du corps filtrant et l'enveloppe 5.

Le flux F des gaz d'échappement entre dans le corps filtrant 3 par les ouvertures d'entrée des canaux d'entrée, traverse les parois latérales filtrantes de ces canaux pour rejoindre les canaux de sortie, puis s'échappe vers l'extérieur par les ouvertures de sortie.

Après un certain temps d'utilisation, les particules, ou « suies », accumulées dans les canaux d'entrée du corps filtrant 3 augmentent la perte de charge due au corps filtrant 3 et altèrent ainsi les performances du moteur. Pour cette raison, le corps filtrant doit être régénéré régulièrement, par exemple tous les 500 kilomètres.

La régénération, ou « décolmatage », consiste à oxyder les suies en les chauffant jusqu'à une température permettant leur inflammation.

Pendant les phases de régénération, la température diffère selon les zones du corps filtrant 3 et ne varie pas uniformément. En effet, les gaz d'échappement transportent vers l'aval l'énergie calorifique dégagée par la combustion des suies. De plus, les suies ne se déposent pas uniformément dans les différents canaux, s'accumulant par exemple de manière préférentielle dans la zone du corps filtrant à proximité de son axe longitudinal, encore appelé « coeur » du corps filtrant. Les zones de combustion ne sont donc uniformément réparties dans le corps filtrant 3. La combustion des suies provoque donc une élévation de température dans le coeur du corps filtrant supérieure à celle dans les zones périphériques. Enfin, les zones périphériques du corps filtrant 3 sont refroidies, à travers l'enveloppe métallique 5, par l'air environnant.

L'inhomogénéité des températures au sein du corps filtrant 3 génère des contraintes locales de fortes amplitudes pouvant conduire à des ruptures ou à des fissures locales. Le corps filtrant 3 doit donc être changé, le corps filtrant usagé étant de préférence recyclé.

Pour augmenter la durée de vie des corps filtrants, il est également possible de procéder à un nettoyage approfondi afin de dégager les canaux d'entrée des cendres résiduelles. Ce nettoyage, classiquement appelé « ash cleaning », est notamment mis en oeuvre pour les filtres destinés aux véhicules poids lourds. Il implique classiquement le démontage du corps filtrant de la ligne d'échappement et la mise en oeuvre d'un appareil de nettoyage externe au véhicule permettant d'extraire les résidus du filtre.

Que ce soit pour une opération de recyclage ou de régénération externe, il est nécessaire de pouvoir identifier rapidement et de manière fiable les faces amont et aval du corps filtrant.

Il existe donc un besoin pour une structure en nid d'abeille facilitant cette identification.

### Résumé de l'invention

L'invention propose une structure en nid d'abeille délimitée par une surface latérale et des faces amont et aval, ladite structure en nid d'abeille comprenant un ensemble de canaux adjacents, chaque canal débouchant par des ouvertures amont et aval sur lesdites faces amont et aval, respectivement, de manière que ledit ensemble de canaux forme des motifs amont et aval sur lesdites faces amont et aval, respectivement.

Selon l'invention, au moins une des faces amont et aval porte une marque détrompeuse rendant impossible une superposition complète de l'un quelconque des motifs amont et aval sur l'autre, le périmètre extérieur du motif amont et/ou aval étant symétrique ou présentant une asymétrie s'étendant sur moins de 10, ou moins de 5, voire moins de 3 canaux.

Autrement dit, si on cherche à superposer les motifs amont et aval, il est impossible de trouver une position de ces motifs telle que
- le motif amont ne déborde, en aucun endroit, du motif aval, et
- le motif aval ne déborde, en aucun endroit, du motif amont.

Comme on le verra plus en détail dans la suite de la description, la simple observation d'une des faces amont et aval permet de détecter la présence ou l'absence de la marque détrompeuse et donc d'identifier rapidement et de manière fiable la face observée.

De plus, la marque détrompeuse résulte par définition d'une caractéristique de forme de la structure en nid d'abeille. La marque détrompeuse ne risque donc pas de s'effacer, comme par exemple une encre.

La caractéristique selon laquelle le périmètre extérieur du motif amont et/ou aval, lorsqu'il est asymétrique, présente une asymétrie s'étendant sur moins de 10, ou moins de 5, voire moins de 3 canaux, signifie que le périmètre extérieur est symétrique si on ne considère pas la portion de ce périmètre délimitée par lesdits canaux.

Une structure en nid d'abeille selon l'invention peut comporter une ou plusieurs des caractéristiques optionnelles suivantes :
- au moins un des motifs amont et aval ne présente pas d'axe de symétrie. De préférence aucun de ces motifs présente un axe de symétrie ;
- La marque détrompeuse s'étend sur moins de 50, moins de 30, moins de 20, moins de 15, moins de 10, moins de 5 canaux, voire sur un seul canal ; La surface de la marque détrompeuse sur ladite au moins une des faces amont et aval représente moins de 10%, moins de 5%, moins de 3%, voire moins de 1% de la surface de ladite face.
- La marque détrompeuse s'étend en périphérie, voire exclusivement en périphérie, de la structure en nid d'abeille ;
- La marque détrompeuse s'étend, depuis ladite au moins une des faces amont et aval, sur une profondeur inférieure à 10%, inférieure à 5%, inférieure à 2%, voire inférieure à 1% et/ou supérieure à 0.1%, supérieure à 0,3%, ou supérieure à 0,5% de la longueur (L) de la structure en nid d'abeille ;
- La marque détrompeuse se maintient,, c'est-à-dire reste apparente, lors d'un frittage de la structure en nid d'abeille, en particulier dans les conditions de frittage décrites ci-après ;
- La marque détrompeuse résulte d'une forme particulière d'un ou plusieurs canaux. En particulier, elle peut résulter d'un facteur de forme particulier, et en particulier d'un facteur de forme différant d'au moins 5%, voire d'au moins 8%, voire d'au moins 12% de la moyenne des facteurs de forme des autres canaux ;
- La marque détrompeuse résulte d'une conformation particulière d'une ou plusieurs des ouvertures, par exemple d'une variation d'épaisseur ou d'une déformation du bord de cette (ces) ouverture(s) ; De préférence, la marque détrompeuse ne crée pas d'angle ou de paroi supplémentaire dans l'ouverture du ou des canaux concernés ;
- Le canal ou les canaux formant la marque détrompeuse présente(nt), au niveau de la face amont et/ou aval, une épaisseur moyenne de paroi qui diffère d'au moins 10%, de préférence d'au moins 20% de l'épaisseur moyenne des autres canaux ;
- Le canal ou les canaux formant la marque détrompeuse présente(nt), au niveau de la face amont et/ou aval, une surface moyenne d'ouverture qui diffère d'au moins 10%, de préférence d'au moins 20%, voire d'au moins 30% de la surface moyenne des ouvertures des autres canaux ;
- Le canal ou les canaux formant la marque détrompeuse présente(nt), au niveau de la face amont et/ou aval, un périmètre extérieur et/ou intérieur différent de celui des autres canaux ; En particulier, le canal ou au moins un des canaux du groupe de canaux formant la marque détrompeuse peut présenter une asymétrie distinctive des autres canaux ;
- La marque détrompeuse n'est pas exclusivement ménagée sur la surface latérale de la structure en nid d'abeille, voire n'est pas ménagée sur ladite surface latérale ;
- Dans au moins une section transversale, de préférence dans n'importe quelle section transversale, les canaux sont agencés sous la forme de lignes et de colonnes, chaque paroi intermédiaire séparant deux lignes ou deux colonnes de canaux présente une forme ondulée, le degré d'asymétrie, mesuré dans ladite section transversale étant de préférence inférieur à 40 %, de préférence inférieur à 30% ;
- La structure en nid d'abeille présente une section transversale constante, c'est-à-dire identique quel que soit le plan transversal de coupe considéré ;
- Une unique marque détrompeuse peut être disposée sur la face amont ou sur la face aval. Deux marques détrompeuses différentes peuvent également être disposées sur les faces amont et aval, respectivement ;
- Une marque détrompeuse peut former un signe ayant une signification, par exemple en dessinant une flèche ou une lettre, par exemple une lettre "E" pour désigner une face amont ;
- Aucun des canaux non exposés à l'extérieur de la structure en nid d'abeille, dits « canaux intérieurs », ne présente, au niveau de la face amont ni au niveau de la face aval, une surface d'ouverture qui diffère de plus de 7%, de préférence de plus 15%, de manière plus préférée de plus de 20%, de la surface d'ouverture de l'un quelconque des autres canaux intérieurs. La marque détrompeuse est particulièrement utile dans cette situation où tous les canaux intérieurs présentent des ouvertures sensiblement de même surface. La faible différence entre les ouvertures rend en effet difficile la distinction des premiers canaux et des deuxièmes canaux ;
- Aucun des canaux de la structure en nid d'abeille ne présente, au niveau de la face amont ni au niveau de la face aval, une surface d'ouverture qui diffère de plus de 7%, de préférence de plus 15%, de manière plus préférée de plus de 20% de la surface d'ouverture de l'un quelconque des autres canaux ;
- La densité de canaux est supérieure à 7,75, supérieure à 15 et/ou inférieure à 100 canaux, inférieure à 60 (par cm² de surface frontale, c'est-à-dire par cm² de la face amont ou de la face aval),
- Le nombre de canaux de la structure en nid d'abeille est supérieur à 100 et/ou inférieur à 2000.
- La structure en nid d'abeille ne comporte que des canaux traversants, c'est-à-dire ne comportant pas de bouchon susceptible d'entraver la circulation d'un fluide ;
- La structure en nid d'abeille présente une forme extérieure cylindrique dont la section transversale a une surface supérieure à 5 cm² et/ou inférieure à 40 cm² ;
- La structure en nid d'abeille présente une forme extérieure cylindrique de section transversale polygonale, en particulier carrée ou hexagonale, la largeur d'un côté de ladite section polygonale étant supérieure à 30 mm et/ou inférieure à 100 mm ;
- La structure en nid d'abeille présente une forme extérieure présentant au moins un plan de symétrie longitudinal. La structure en nid d'abeille peut notamment présenter une forme cylindrique de section ronde, ellipsoïdale, comme pour les structures en nid d'abeille de certains corps filtrants monolithiques de la technique antérieure, ou de section carrée, comme pour les structures en nid d'abeille de certains blocs filtrants unitaires de la technique antérieure. Pour ce type de structures en nid d'abeille, la différentiation des faces amont et aval est en effet généralement particulièrement délicate ;
- La structure en nid d'abeille comporte un matériau fritté, voire est constituée en un matériau fritté ;
- Le matériau de la structure en nid d'abeille est en un matériau céramique ;
- La structure en nid d'abeille est constituée en un unique matériau (à la différence, par exemple, d'un corps filtrant assemblé au moyen d'un ciment de joint d'une nature différente de celle des blocs filtrants unitaires assemblés) ;
- La marque détrompeuse est constituée dans le même matériau que le reste de la structure en nid d'abeille ;
- La structure en nid d'abeille est une structure extrudée ;
- Le matériau de la structure en nid d'abeille présente une porosité totale supérieure à 10%, de préférence supérieure à 30%, voire supérieure à 40%, ou même supérieure à 50% et/ou inférieure à 80%, ou inférieure à 70%.

Dans un mode de réalisation, une structure en nid d'abeille selon l'invention comporte des ensembles imbriqués de premiers canaux et de deuxièmes canaux adjacents et disposés de manière à former, en section, un motif de préférence régulier, de préférence encore en damier,
- le volume total cumulé desdits premiers canaux étant supérieur à celui desdits deuxièmes canaux ; et/ou
- la surface totale cumulée des ouvertures des premiers canaux sur au moins une des faces amont et aval étant supérieure à celle des ouvertures des deuxièmes canaux sur l'autre desdites faces amont et aval ; et/ou
- les premiers canaux présentant une première section transversale, de préférence constante, les deuxièmes canaux présentant une deuxième section transversale, de préférence constante, et la première section transversale étant différente de la deuxième section transversale.

Un « motif régulier » est un motif selon lequel les premiers et deuxièmes canaux sont toujours agencés de la même manière les uns par rapport aux autres, quelle que soit la zone considérée du motif. Une disposition en alternance des premiers canaux et des deuxièmes canaux sur la hauteur et sur la largeur d'un élément filtrant forme ainsi un motif régulier sous la forme d'un damier.

Une telle structure en nid d'abeille selon l'invention peut encore comporter une ou plusieurs des caractéristiques optionnelles suivantes :
- les sections transversales des premiers canaux et/ou des deuxièmes canaux sont constantes le long desdits canaux ;
- Lesdits premiers et deuxièmes canaux sont rectilignes et parallèle ; s
- Le rapport r du volume total cumulé Ve des premiers canaux sur le volume total cumulé Vs des deuxièmes canaux est supérieur à 1,03 supérieur à 1,10, supérieur à 1,15 et/ou inférieur à 3, inférieur à 2,5, de préférence inférieur à 2 ;
- Le rapport r' de la surface intérieure totale cumulée des premiers canaux sur la surface intérieure totale cumulée des deuxièmes canaux est supérieur à 1,03 supérieur à 1,10, supérieur à 1,15 et/ou inférieur à 3, inférieur à 2.5, de préférence inférieur à 2 ;
- Le rapport du diamètre hydraulique moyen des premiers canaux (c'est-à-dire en moyenne sur l'ensemble de ces canaux) sur le diamètre hydraulique moyen des deuxièmes canaux est supérieur à 1,03, supérieur à 1,10, supérieur à 1,15 et/ou inférieur à 1,8, inférieur à 1,3, de préférence inférieur à 1,2 ;
- De préférence, le degré d'asymétrie, mesuré sur au moins une des faces amont et aval, est inférieur à 30%, de préférence inférieure ou égale à 20% et, de manière encore plus préférée, inférieure ou égale à 15% ;
- Au moins une des faces amont et aval, de préférence chacune des faces amont et aval, présente une forme générale plane. Ainsi, par exemple, aucun canal ne débouche au fond d'une fente qui serait ménagée à partir d'un de ces faces ; La présence de la marque détrompeuse modifie de moins de 10%, moins de 5%, moins de 3%, moins de 1% la surface totale de paroi séparant les premiers canaux et les deuxièmes canaux. Cette surface correspond, dans le cas d'une structure destinée à la filtration, à la surface de paroi traversée par le fluide à filtrer lorsqu'il transite entre les premiers canaux et les deuxièmes canaux.

Une telle structure en nid d'abeille selon l'invention peut notamment être utilisée pour fabriquer un corps filtrant monolithique ou un bloc filtrant unitaire destiné à être assemblé pour former un corps filtrant assemblé. Les premiers et deuxièmes canaux sont alors bouchés sur les faces aval et amont, respectivement, devenant ainsi des canaux d'entrée et de sortie, respectivement. On désigné globalement par « élément filtrant » selon l'invention un tel corps filtrant monolithique ou un tel bloc filtrant unitaire.

Un élément filtrant selon l'invention peut notamment comprendre des ensembles imbriqués de premiers canaux et de deuxièmes canaux adjacents et s'étendant depuis une face amont jusqu'à une face aval dudit élément filtrant, chaque premier canal débouchant par une ouverture amont sur la face amont et étant bouché sur la face aval, chaque deuxième canal débouchant par une ouverture aval sur la face aval et étant bouché sur la face amont.

Comme on le verra ci-dessous, les bouchons peuvent avantageusement être utilisés pour faciliter la distinction entre les faces amont et aval.

Dans un mode de réalisation particulier, l'élément filtrant comporte un nombre de premiers canaux différent du nombre de deuxièmes canaux.

De préférence, le nombre de premiers canaux diffère de moins de 20%, moins de 10%, moins de 5%, voire de moins de 1 % du nombre de deuxième canaux.

Dans un mode de réalisation particulier, les ensembles imbriqués de premiers canaux et de deuxièmes canaux adjacents forment, sur au moins une des faces amont et aval, de préférence sur les deux faces amont et aval, un motif régulier, de préférence encore en damier, sauf dans au moins une zone, dite « irrégulière ». Dans cette zone irrégulière, la régularité dans la disposition des premiers et deuxièmes canaux est donc interrompue.

De préférence, un élément filtrant selon l'invention comporte moins de 30, moins de 20, moins de 10, moins de 5, moins de 2 zones irrégulières, de préférence seulement une zone irrégulière. De préférence, une zone irrégulière couvre moins de 30, moins de 20, moins de 10, moins de 5, moins de 2 canaux, de préférence seulement un canal.

Dans un mode de réalisation, la création d'une zone irrégulière résulte d'une inversion du type d'un canal, un canal qui, suivant le motif régulier aurait dû être un « premier » canal étant un « deuxième » canal. Dans un motif à damier, une telle zone irrégulière peut conduire à l'apparition d'une croix formée par des bouchons sur une des faces amont et aval, et d'une croix formée par des ouvertures sur l'autre des faces amont et aval.

Dans ce mode de réalisation, la zone irrégulière ne s'étend que sur un unique canal et, avantageusement, ne perturbe donc sensiblement pas le fonctionnement de l'élément filtrant.

L'élément filtrant peut notamment présenter une forme extérieure cylindrique de section transversale polygonale ou arrondie, par exemple circulaire ou ellipsoïdale.

Dans un mode de réalisation, une zone irrégulière peut couvrir un canal intérieur.

Lorsque l'élément filtrant est un bloc filtrant unitaire, il est cependant préférable qu'une zone irrégulière ne couvre que des canaux périphériques. Ces derniers, en contact avec le ciment après assemblage, présentent de ce fait une efficacité de filtration inférieure à celle des canaux intérieurs. La création d'une zone irrégulière couvrant un ou plusieurs canaux périphériques conduit donc à une réduction plus faible de l'efficacité de filtration du corps filtrant assemblé.

Dans un mode de réalisation particulier, l'élément filtrant présente une forme extérieure cylindrique de section transversale polygonale et, sur au moins une des faces latérales de la structure en nid d'abeille, le nombre de canaux périphériques est impair.

Ainsi, le bouchage alterné des canaux conduit-il sur une seule des deux faces amont et aval, à boucher les deux canaux périphériques aux extrémités de cette face latérale, c'est-à-dire les deux canaux d'angle de cette face latérale. Il devient ainsi aisé de distinguer la face amont de la face aval.

Un nombre impair de canaux périphériques le long d'une face latérale peut conduire à un nombre de canaux d'entrée ou de canaux de sortie supérieur au nombre de canaux de sortie ou de canaux d'entrée, respectivement. Une telle caractéristique aurait donc pu être considérée comme contraire à l'optimisation des performances. Les inventeurs ont cependant constaté que la différence entre les nombres de canaux d'entrée et de sortie est insignifiante et n'a pas d'effet mesurable.

Dans un mode de réalisation, sur au moins deux des faces latérales de la structure en nid d'abeille, de préférence sur toutes les faces latérales de la structure en nid d'abeille, le nombre de canaux périphériques est impair.

La structure en nid d'abeille peut en particulier présenter une forme extérieure cylindrique de section transversale rectangulaire, carrée ou hexagonale. La largeur d'un côté de ladite section transversale peut notamment être supérieure à 30 mm et/ou inférieure à 100 mm.

L'invention concerne également une filière d'extrusion présentant une section transversale de passage quadrillée et dépourvue d'axe de symétrie.

Le quadrillage permet la fabrication d'une structure en nid d'abeille par extrusion. Avec un tel quadrillage, l'absence d'axe de symétrie permet d'obtenir, par simple extrusion, une structure en nid d'abeille selon l'invention.

Une filière d'extrusion peut être également conformée pour pouvoir obtenir, par simple extrusion, une ou plusieurs des caractéristiques optionnelles d'une structure en nid d'abeille selon l'invention.

L'invention concerne encore un procédé comportant une étape de positionnement d'une structure en nid d'abeille selon l'invention, procédé selon lequel on identifie les faces amont et/ou aval par observation de la marque détrompeuse de ladite structure en nid d'abeille et on positionne ladite structure en nid d'abeille en fonction de ladite identification.

Le positionnement peut être réalisé pour orienter la structure en nid d'abeille suivant la direction longitudinale et/ou autour de ladite direction longitudinale.

Ce procédé peut notamment être choisi parmi :
- un procédé de bouchage de canaux de ladite structure en nid d'abeille,
- un procédé de nettoyage de ladite structure en nid d'abeille, notamment afin d'évacuer, en partie ou complètement, des cendres résiduelles ;
- un procédé d'application d'un revêtement catalytique sur ladite structure en nid d'abeille,
- un procédé d'application d'un revêtement périphérique, notamment en un ciment de revêtement isolant thermiquement et étanche aux gaz d'échappement ;
- un procédé de montage d'un corps filtrant comportant une structure en nid d'abeille selon l'invention dans une ligne d'échappement d'un véhicule automobile ou dans une enveloppe destinée à être intégrée à une telle ligne d'échappement,
- un procédé d'assemblage d'une pluralité de blocs filtrants unitaires comportant une structure en nid d'abeille selon l'invention, de manière à constituer un corps filtrant assemblé. L'identification des faces amont et/ou aval peut être avantageusement automatisée, notamment pour une exploitation industrielle à grande échelle.

L'invention concerne aussi l'utilisation d'une structure en nid d'abeille selon l'invention pour dépolluer des gaz d'échappement, en particulier d'un moteur à combustion interne d'un véhicule automobile, et l'utilisation d'une telle structure dans un échangeur de chaleur.

L'invention se rapporte également à un procédé de fabrication d'une structure en nid d'abeille comprenant les étapes successives suivantes :
a) extrusion d'une matière céramique à travers une filière de manière à former une préforme en nid d'abeille,
b) séchage et frittage de ladite préforme pour obtenir une structure en nid d'abeille frittée.

Dans un mode de réalisation, la filière est une filière d'extrusion selon l'invention. Dans ce cas, la préforme constitue une structure en nid d'abeille selon l'invention.

Dans un mode de réalisation, avant ou après frittage, de préférence avant frittage, une marque détrompeuse est ménagée par déformation et/ou enlèvement et/ou ajout de matière.

La mise en oeuvre d'une filière d'extrusion selon l'invention est préférée car elle évite le recours à un outil de mise en forme spécifique, par exemple pour déformer localement un canal ou un groupe de canaux. En outre, elle ne nécessite pas d'étape supplémentaire dans le procédé de fabrication.

La filière peut être monobloc et conformée pour produire la marque détrompeuse lors de l'extrusion.

Dans un mode de réalisation, une cale ou un cadre d'obturation de la filière est positionné, en aval de la filière, pour produire la marque détrompeuse lors de l'extrusion. Avantageusement, la même filière peut ainsi servir pour fabriquer une structure en nid d'abeille selon l'invention ou une structure en nid d'abeille hors invention, selon qu'elle est pourvue de ladite cale ou dudit cadre d'obturation.

La préforme d'une structure en nid d'abeille frittée fabriquée suivant un procédé selon l'invention au moyen d'une filière selon l'invention est elle-même une structure en nid d'abeille selon l'invention.

L'invention se rapporte également à un procédé de fabrication d'un élément filtrant comprenant les étapes successives suivantes :
a') extrusion d'une matière céramique à travers une filière de manière à former une préforme en nid d'abeille,
b') séchage et frittage de ladite préforme pour obtenir une structure en nid d'abeille frittée,
c') bouchage de canaux de ladite structure en nid d'abeille frittée de manière à obtenir, systématiquement, un élément filtrant selon l'invention.

Les étapes a') et b') peuvent notamment être des étapes a) et b), respectivement.

Dans un mode de réalisation, le bouchage des canaux est effectué avant l'opération de frittage.

Une structure en nid d'abeille selon l'invention, de préférence sous la forme d'un élément filtrant selon l'invention, peut être assemblée à d'autres structures en nid d'abeille, de préférence selon l'invention, par exemple avec interposition de joints, continus ou non, pour fabriquer un corps assemblé.

L'invention concerne donc également un corps assemblé remarquable en ce qu'il comporte au moins une structure en nid d'abeille conforme à l'invention.

L'invention concerne enfin un échangeur de chaleur, un bloc filtrant unitaire, un corps filtrant assemblé et un corps filtrant monolithique, en particulier destinés à un filtre à particules, remarquables en ce qu'ils comportent au moins une structure en nid d'abeille conforme à l'invention.

De préférence, les canaux du bloc filtrant unitaire, du corps filtrant assemblé ou du corps filtrant monolithique selon l'invention sont alternativement bouchés sur la face amont et sur la face aval.

Dans un mode de réalisation, les canaux sont agencés les uns par rapport aux autres de manière que l'intégralité d'un fluide entrant dans un canal par la face amont sorte sur la face aval par des canaux adjacents audit canal.

Un corps filtrant assemblé peut comporter un ou plusieurs blocs filtrants unitaires selon l'invention. Les marques détrompeuses de ces blocs filtrants unitaires peuvent être identiques ou différentes. Dans un mode de réalisation, seul un bloc filtrant unitaire porte une marque détrompeuse, ce qui limite la perte de charge.

### Définitions

Par « diamètre hydraulique » d'une section transversale ou d'un canal, on entend le rapport entre quatre fois la section du canal sur le périmètre du canal.

Par « taux d'asymétrie » d'une structure en nid d'abeille comportant des premiers canaux et des deuxièmes canaux, on entend le rapport entre le volume des premiers canaux sur le volume des deuxièmes canaux. Dans un corps filtrant monolithique ou un bloc filtrant unitaire destiné à être assemblé pour former un corps filtrant assemblé, les premiers et deuxièmes canaux peuvent en particulier correspondre à des canaux.d'entrée et des canaux de sortie, respectivement.

On appelle « facteur de forme » la racine carrée de 4Pi*section /périmètre² d'un canal.

On appelle "périmètre extérieur d'un canal" la ligne qui, dans un plan transversal, définit la limite extérieure de ce canal (par rapport à l'axe du canal). On appelle "périmètre intérieur d'un canal" la ligne qui, dans un plan transversal, définit la limite du volume intérieur de ce canal.

De même, on appelle "périmètre extérieur d'une structure en nid d'abeille" la ligne qui, dans un plan transversal, définit la limite extérieure de cette structure.

On appelle "surface moyenne d'ouverture" d'un groupe de canaux la moyenne des surfaces des ouvertures des canaux de ce groupe.

Sauf mention contraire, toutes les moyennes sont des moyennes arithmétiques.

Un plan transversal est un plan perpendiculaire à la direction longitudinale d'une structure. Dans une structure en nid d'abeille dont les canaux sont tous parallèles, un plan transversal est un plan perpendiculaire à la direction de ces canaux.

Un plan longitudinal est un plan incluant la direction longitudinale (C-C ou D-D sur les figures).

Par "comportant un", il faut comprendre "comportant au moins un", sauf indication contraire.

### Brève description des figures

La description qui va suivre, faite en se référant aux dessins annexés, permettra de mieux comprendre et apprécier les avantages de l'invention. Dans ces dessins :
- la figure 1 représente schématiquement en perspective un corps filtrant assemblé ;
- la figure 2 représente schématiquement en perspective un bloc filtrant unitaire du corps filtrant assemblé représenté sur la figure 1 ;
- la figure 3 représente schématiquement en perspective un corps filtrant monolithique ;
- la figure 4 représente schématiquement en coupe longitudinale médiane, suivant le plan de coupe P, le corps filtrant assemblé représenté sur la figure 1, après canning ;
- les figures 5 à 15 représentent schématiquement des parties des motifs amont (figures indicées "a") et aval (figures indicées "b") de différentes structures en nid d'abeille selon la technique antérieure (figures 5a et 5b) et selon l'invention (figures suivantes). Les positions de ces parties de motif sont référencées par "a" et "b" sur la figure 2 ;
- les figures 16 et 17 représentent schématiquement des motifs amont (figures indicées "a") et aval (figures indicées "b") de structures en nid d'abeille hors invention et selon l'invention, respectivement.

Sur ces figures, non limitatives, les différents éléments ne sont pas nécessairement représentés à la même échelle. Des références identiques ont été utilisées sur les différentes figures pour désigner des éléments identiques ou similaires.

Pour améliorer la clarté des figures, le nombre de canaux représentés est très inférieur à celui des blocs ou corps filtrants classiquement commercialisés.

### Description détaillée

### Structure en nid d'abeille

La marque détrompeuse d'une structure en nid d'abeille est visible en observant une des faces amont et aval en vue de face, c'est-à-dire, sur les figures 1 et 3, en observant ces faces selon l'axe longitudinal C-C de la structure en nid d'abeille (ou selon l'axe D-D sur la figure 2).

Les figures 1 à 4 ayant été décrites en préambule, on se reporte aux figures suivantes qui fournissent différents exemples de motifs amont et aval de blocs filtrants unitaires. Les exemples concernent des blocs filtrants unitaires cylindriques de base carrée, dits "parallélépipédiques", destinés à être assemblés pour former un corps filtrant, comme décrit ci-dessus. L'invention n'est cependant pas limitée à de tels blocs.

Toutes les figures 5 à 15 concernent un bloc filtrant unitaire 11 comme celui représenté sur la figure 2, qui comporte des ensembles de canaux d'entrée 18e et de canaux de sortie 18s adjacents, agencés les uns par rapport aux autres de manière que l'intégralité du gaz filtré par un canal d'entrée quelconque passe dans des canaux de sortie adjacents audit canal d'entrée. Ainsi, il n'existe pas de zones d'un ou plusieurs canaux d'entrée qui débouchent dans un autre canal d'entrée, zones qui ne peuvent être utiles à la filtration. La surface de filtration (c'est-à-dire la surface utile des parois des canaux d'entrée) disponible pour un volume de structure en nid d'abeille déterminé en est optimisée.

Les canaux d'entrée 18e et de sortie 18s sont parallèles et rectilignes suivant la longueur L du bloc filtrant unitaire. Ils comportent tous une section constante suivant cette longueur L. Avantageusement, il est ainsi possible de fabriquer par extrusion la structure en nid d'abeille convenant à la fabrication du bloc filtrant unitaire 11. Les motifs amont et aval correspondent donc ici à des coupes transversales du bloc filtrant unitaire 11, l'observateur observant depuis le côté amont ou aval de ces coupes, respectivement.

Les ensembles de canaux d'entrée et de canaux de sortie sont imbriqués l'un dans l'autre de manière à former, en section transversale, un motif en damier où lesdits canaux d'entrée alternent avec lesdits canaux de sortie, dans le sens de la hauteur de la page comme dans celui de sa largeur.

Les canaux d'entrée ont une section transversale supérieure à celle des canaux de sortie afin d'augmenter le volume disponible pour le stockage des résidus. Avantageusement, la fréquence de nettoyage du filtre en est réduite.

A cet effet, les parois des canaux d'entrée sont "déformées" pour accroître le volume global des canaux d'entrée aux dépens de celui des canaux de sortie. Par exemple, ces parois peuvent être concaves du côté d'un canal d'entrée et convexes du côté des canaux de sortie qui lui sont adjacents.

Les parois intermédiaires 42 et 44 séparant deux rangs horizontaux (lignes 19) ou deux rangs verticaux (colonnes 20) de canaux, respectivement (la direction verticale étant définie par un bord latéral de la feuille), présente ainsi en coupe transversale, une forme ondulée ou « en vague » (« wavy » en anglais), la paroi intermédiaire ondulant sensiblement d'une demi longueur d'ondulation sur la largeur d'un canal. On appelle "longueur" d'une ondulation, la distance séparant deux points de cette ondulation localisés à une même hauteur, avec le même sens de variation de pente. Dans le cas d'une ondulation périodique, la "longueur" de l'ondulation est appelée "période".

De préférence l'ondulation est périodique, mais l'amplitude des ondulations peut être constante ou variable. De préférence cette amplitude est constante. De préférence encore, l'ondulation présente une forme sinusoïdale dont la demi-période est égale au pas "p" du réseau de canaux (voir figure 5b), ou une succession d'arcs de cercles adjacents, chaque arc présentant une longueur égale au pas « p ».

De préférence enfin, toutes les parois intermédiaires 42 du bloc filtrant unitaire, s'étendant verticalement ou horizontalement, présentent, en coupe transversale, une ondulation de forme identique.

Le « degré d'asymétrie » d'une structure « wavy » désigne le rapport entre l'amplitude « h_{w} » et la demi longueur de ladite ondulation, c'est-à-dire, dans le cas d'une ondulation périodique, le rapport entre l'amplitude « h_{w} » et la demi-période. De préférence, le degré d'asymétrie est inférieur à 40 %, de préférence inférieur à 30%, de préférence inférieur à 20%, de manière encore plus préférée, inférieur ou égal à 10%. Avantageusement, la perte de charge induite par le bloc filtrant unitaire après accumulation de suies est ainsi sensiblement réduite, et la fréquence de la régénération du corps filtrant est donc limitée.

Avec cette configuration asymétrique des canaux, le volume total cumulé des canaux d'entrée est supérieur à celui des canaux de sortie et la surface totale cumulée des ouvertures des canaux d'entrée sur la face amont, c'est-à-dire la somme des aires de ces ouvertures, est supérieure à celle des ouvertures des canaux de sortie sur la face aval.

Pour une efficacité optimale, le rapport r du volume total cumulé Ve des canaux d'entrée sur le volume total cumulé Vs des canaux de sortie ou le rapport r' de la surface intérieure totale cumulée des canaux d'entrée sur la surface intérieure totale cumulée des canaux de sortie est cependant, de préférence, supérieur à 1,03 supérieur à 1,10, supérieur à 1,15 et/ou inférieur à 3, inférieur à 2,5 de préférence inférieur à 2.

L'identification des faces amont et aval peut être difficile lorsque la forme des ouvertures des canaux d'entrée est proche à celle des canaux de sortie, comme sur les figures 5a et 5b. Une marque détrompeuse M est alors particulièrement utile.

Dans les différents modes de réalisation représentés, ni le motif amont, ni le motif aval ne présente un axe de symétrie. Il est dès lors impossible de superposer les motifs amont et aval.

La marque détrompeuse M peut s'étendre sur un ou plusieurs canaux. En particulier, elle peut s'étendre sur moins de 50, moins de 30, moins de 20, moins de 10, moins de 5 canaux, voire sur un seul canal. Avantageusement, elle n'affecte donc pas ou sensiblement l'écoulement du gaz à travers le corps filtrant, et notamment la perte de charge induite par la traversée du corps filtrant.

La marque détrompeuse M peut s'étendre sur un ou plusieurs canaux exclusivement choisis dans le groupe des canaux périphériques, dans le groupe des canaux d'angle ou dans le groupe des canaux intérieurs. Dans un mode de réalisation, la marque détrompeuse s'étend sur un ou plusieurs canaux exclusivement choisis dans le groupe des canaux périphériques, voire exclusivement dans le groupe des canaux d'angle. De préférence elle s'étend sur un unique canal périphérique ou d'angle.

Dans le cas où la marque détrompeuse est ménagée sur un unique canal d'angle, elle ne doit pas être symétrique par rapport à la bissectrice de cet angle si le bloc filtrant unitaire est lui même symétrique par rapport à cette bissectrice. C'est pourquoi, dans les modes de réalisation représentés, qui concernent des blocs filtrants unitaires de section carrée, la marque détrompeuse n'a pas été ménagée dans un canal d'angle.

La disposition de la marque détrompeuse M en périphérie de la structure en nid d'abeille, et en particulier sur un canal d'angle de cette structure facilite avantageusement sa fabrication. Une cale ou un cadre d'obturation peut en effet être aisément positionné sur la filière d'extrusion pour créer la marque détrompeuse lors de l'extrusion.

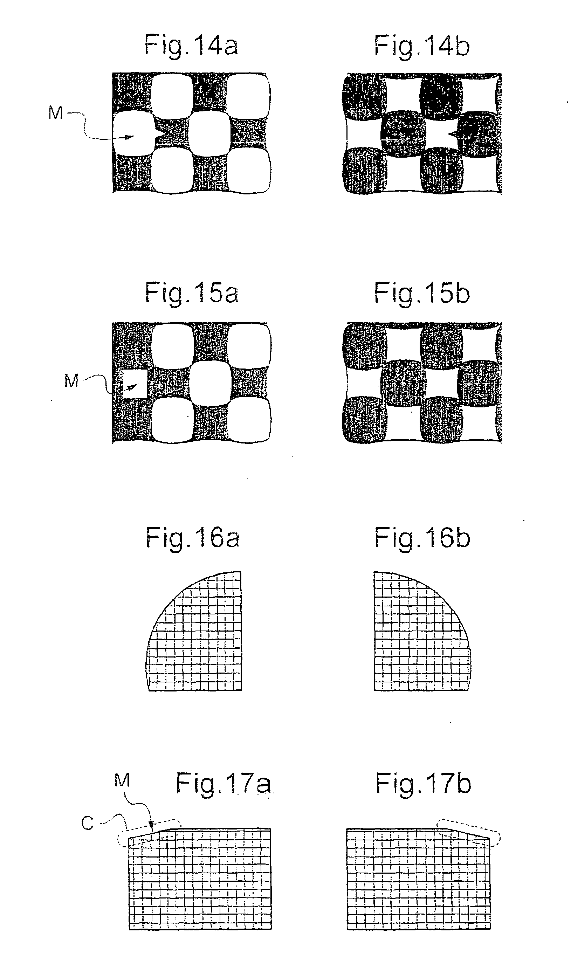

Les figures 16a et 16b représentent les faces amont et aval d'une structure en nid d'abeille hors invention. Certes, cette structure en nid d'abeille présente une marque détrompeuse puisque son périmètre extérieur est asymétrique. Cependant, cette marque détrompeuse s'étend sur un nombre de canaux supérieur à 10.

Au contraire, sur les figures 17a et 17b, la marque détrompeuse s'étend sur un nombre de canaux inférieur à 10. Sur ces figures, les canaux concernés ont été entourés (cercle C).

La marque détrompeuse peut résulter d'une forme particulière d'un ou plusieurs canaux. En particulier, elle peut résulter d'un facteur de forme particulier, et en particulier d'un facteur de forme différant d'au moins 3%, d'au moins 5%, voire d'au moins 8%, voire d'au moins 12% de la moyenne des facteurs de forme des autres canaux.

La marque détrompeuse peut résulter d'une conformation particulière d'une ou plusieurs des ouvertures d'entrée et/ou de sortie, par exemple d'une variation d'épaisseur, d'une déformation de la préforme, notamment par un pincement ou un élargissement de ce(s) ouverture(s).

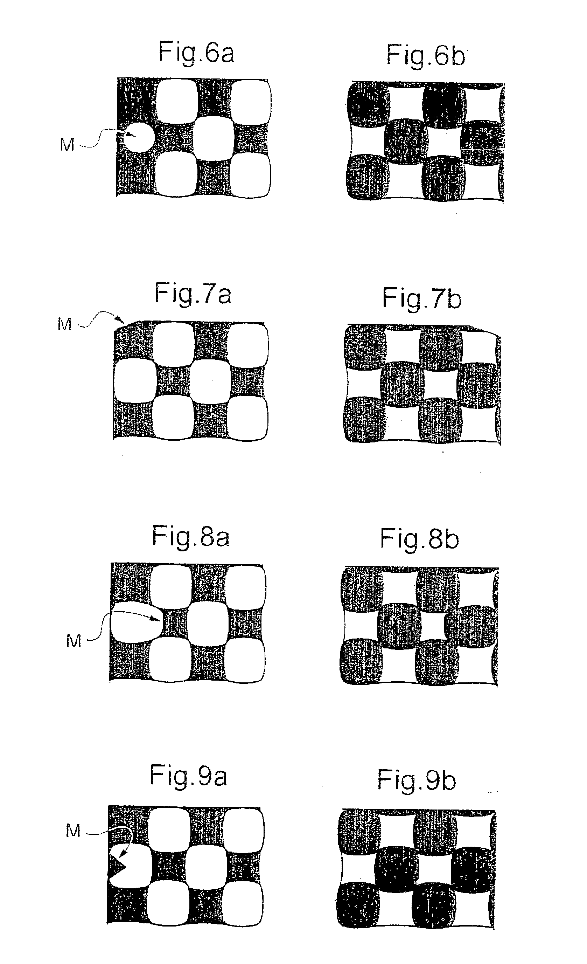

De préférence, la création de la marque détrompeuse ne crée pas d'angle supplémentaire dans l'ouverture du ou des canaux concernés. Au contraire, la marque détrompeuse peut résulter de la suppression d'un angle dans l'ouverture du ou des canaux concernés, par exemple d'une circularisation de cette ouverture. Une ouverture circulaire ou présentant un bord au moins en partie arrondie peut notamment constituer une marque détrompeuse, comme représenté sur les figures 6a et 6b. Avantageusement, dans une application à un filtre de véhicule automobile, cette conformation ne modifie pas, voire réduit, les contraintes thermomécaniques subies par le corps filtrant lors de son utilisation.

Dans un mode de réalisation, le canal ou le groupe de canaux formant la marque détrompeuse présente, au niveau de la face amont et/ou aval, une épaisseur moyenne de paroi qui diffère d'au moins 10%, de préférence d'au moins 20% de l'épaisseur moyenne des autres canaux.

Dans un mode de réalisation, le canal ou le groupe de canaux formant la marque détrompeuse présente, au niveau de la face amont et/ou aval, une surface moyenne d'ouverture qui diffère d'au moins 10%, de préférence d'au moins 20%, voire d'au moins 30% de la surface moyenne des ouvertures des autres canaux (voir figures 8a et 8b).

Dans un mode de réalisation, la déformation d'une ouverture d'un canal correspond à une déformation d'une ouverture d'un canal adjacent, comme sur les figures 8a et 8b ou 14a et 14b. Lorsque la section transversale est constante, les deux motifs amont et aval sont alors affectés par le ménagement de la marque détrompeuse. Il en est de même pour une marque détrompeuse ménagée sur la surface latérale de la structure en nid d'abeille (figures 7a et 7b).

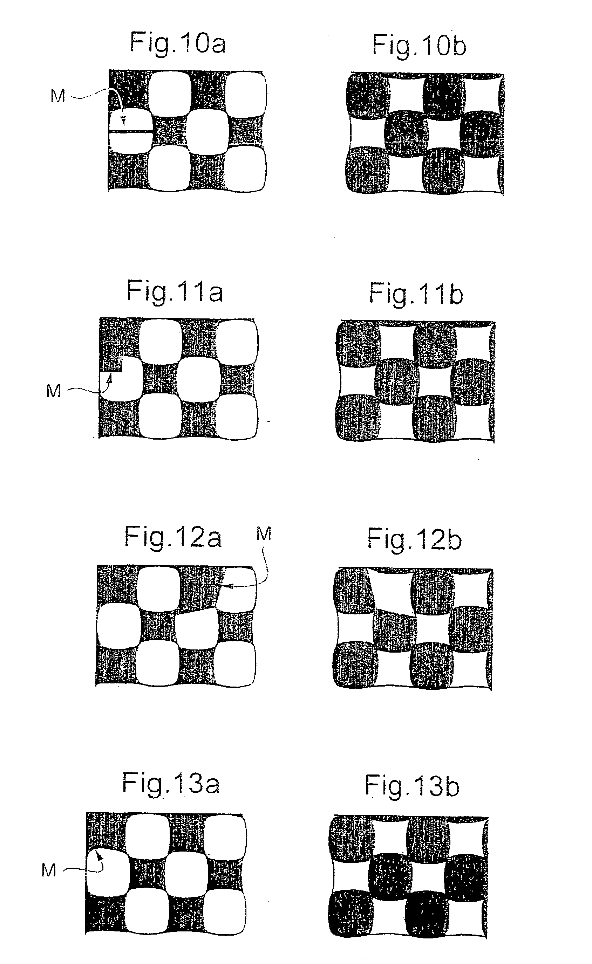

La marque détrompeuse peut résulter d'un ajout de matière (voir par exemple les figures 9a et 9b), par exemple d'une cloison (figures 10a et 10b), ou d'un enlèvement de matière dans les canaux concernés.

La marque détrompeuse peut aussi résulter d'une modification du périmètre extérieur de la structure en nid d'abeille, comme représenté sur les figures 7a et 7b. De préférence cependant, la marque détrompeuse ne résulte pas, ou ne résulte pas seulement, de la modification de ce périmètre. Autrement dit, elle n'est pas exclusivement ménagée sur la surface latérale 13 de la structure en nid d'abeille. Ainsi, elle reste visible si cette surface latérale est modifiée, notamment par l'application d'un revêtement périphérique ou d'un ciment de joint.

Dans un mode de réalisation, le canal ou le groupe de canaux formant la marque détrompeuse présente, au niveau de la face amont et/ou aval, un périmètre extérieur et/ou intérieur différent de celui des autres canaux. En particulier, le canal ou au moins un des canaux du groupe de canaux formant la marque détrompeuse peut présenter une asymétrie ou une forme qui la distingue des autres canaux. Les figures 15a et 15b représentent un exemple de réalisation comportant une marque détrompeuse sous la forme d'un canal de section carrée dans une structure en nid d'abeille ne comportant sinon que des canaux de type « wavy ».

Bien entendu, les différentes variantes décrites ici peuvent éventuellement être combinées.

### Procédé de fabrication

Une structure en nid d'abeille selon l'invention peut être fabriquée par toutes les techniques actuellement utilisées.

Dans un mode de réalisation, une préforme en nid d'abeille est marquée lors d'une étape spécifique, après extrusion. Par exemple un ou plusieurs canaux de la préforme peuvent être localement écrasés, pincés ou élargis. Avantageusement, l'ajout d'une marque détrompeuse ne nécessite aucune consommation supplémentaire de matière. En outre, la marque détrompeuse peut être locale, par exemple ne s'étendre que sur l'ouverture d'un ou plusieurs canaux d'entrée. En particulier, il n'est pas indispensable de modifier la structure en nid d'abeille sur toute sa longueur pour y ajouter une marque détrompeuse.

Dans un mode de réalisation, la marque détrompeuse peut être créée après frittage de la préforme, par exemple par usinage. En particulier, il est possible de chanfreiner un coin ou une arête de la structure en nid d'abeille.

De préférence, on procède suivant les étapes a) et b) décrites ci-dessus en utilisant une filière d'extrusion selon l'invention. La structure en nid d'abeille présente une section transversale constante, et la marque détrompeuse est venue de matière avec la préforme. Avantageusement, on évite ainsi le recours à un outil de mise en forme spécifique. En outre, ce procédé ne nécessite pas d'étape supplémentaire dans le procédé de fabrication, ce qui est particulièrement avantageux, notamment par rapport à un procédé impliquant une incrustation par ablation laser. D'autant plus que cette dernière technologie est d'un coût élevé.

Enfin, une filière d'extrusion peut avantageusement être facilement fabriquée à partir d'une filière conventionnelle en disposant une cale ou un cadre d'obturation, en aval de la filière, pour produire la marque détrompeuse lors de l'extrusion.

Les étapes a) et b) sont des étapes classiquement mises en oeuvre pour la fabrication de structures en nid d'abeille conventionnelles. Ces étapes sont par exemple décrites dans les demandes de brevets EP 816 065, EP 1 142 619, EP 1 455 923, WO 2004/090294 ou encore WO 2005/063462. Les conditions de frittage sont adaptées en fonction des matériaux utilisés.

La température de frittage est de préférence supérieure à 1300 °C, de préférence supérieure à 1600°C, de préférence supérieure à 1800 °C et/ou inférieure à 2400 °C, de préférence inférieure à 2350°C.

### Application à un corps filtrant

Une structure en nid d'abeille selon l'invention est particulièrement utile pour fabriquer un corps filtrant monolithique ou un bloc filtrant destiné à être assemblé pour former un corps filtrant assemblé.

A cet effet, les ouvertures de certains canaux doivent être bouchées sur la face aval pour constituer des canaux d'entrée et les ouvertures des autres canaux doivent être bouchées sur la face amont pour constituer des canaux de sortie. L'opération de bouchage peut nécessiter une adaptation du procédé en fonction du type de canal à boucher, en particulier en fonction de sa section ou de sa forme. Il est alors indispensable de pouvoir identifier la face amont et la face aval.

Cette identification peut être difficile lorsque les ouvertures des canaux d'entrée sont similaires à celles des canaux de sortie.

Dans les procédés modernes de fabrication en grande série de corps filtrants, une caméra est utilisée pour cette identification. Un tel dispositif d'identification est cependant coûteux et nécessite une étape supplémentaire.

En outre, si la différence entre la forme des ouvertures des canaux d'entrée et celle des canaux de sortie est peu perceptible, des erreurs d'identification sont possibles.

Enfin, la variabilité du procédé d'extrusion conduit à des variations de forme des canaux qui peuvent également produire des erreurs d'identification. Ces erreurs d'identification conduisent à boucher la mauvaise ouverture des canaux ou à produire des bouchons de mauvaise qualité. Le corps filtrant doit alors être mis au rebut. La marque détrompeuse d'une structure en nid d'abeille selon l'invention est donc particulièrement utile.

Dans un mode de réalisation, une partie de la structure en nid d'abeille est revêtue d'un revêtement catalytique, ou « wash coat », par exemple adapté pour le traitement des gaz polluants du type CO, HC ou NOx. Par exemple, pour une performance optimale, le revêtement catalytique peut n'être appliqué que sur les surfaces délimitant une partie des canaux, par exemple sur les seules surfaces délimitant les canaux d'entrée d'un corps filtrant. Lors de l'application du revêtement catalytique, il est donc indispensable d'identifier les faces de la structure en nid d'abeille. Une structure en nid d'abeille selon l'invention est bien adaptée à cet effet.

Lorsqu'un corps filtrant doit être monté sur une ligne d'échappement, il est également important qu'il soit bien orienté par rapport au flux des gaz à filtrer ou à dépolluer. On limite ainsi le risque d'une perte de charge ou d'un volume de stockage en suies et en résidus non-conformes. On limite également le risque d'erreur de régulation de la régénération et de surconsommation en carburant.

Comme expliqué ci-dessus, de préférence, la marque détrompeuse ne résulte pas de la seule modification du périmètre extérieur du corps filtrant. A la différence d'un marquage appliqué exclusivement sur la surface latérale du corps filtrant, elle ne risque donc pas d'avoir été effacée ou rendue invisible par l'application d'un revêtement périphérique sur cette surface latérale.

Cette caractéristique est également avantageuse lorsque le corps filtrant est disposé dans une enveloppe ("canning") avant que cette dernière ne soit montée sur la ligne d'échappement, en particulier lorsque l'enveloppe ne présente pas d'indication permettant de repérer le sens de l'écoulement des gaz d'échappement à travers le corps filtrant.

La marque détrompeuse d'un corps filtrant selon l'invention autorise ainsi, avantageusement, le masquage de la surface latérale d'un corps filtrant, par un revêtement catalytique, un revêtement périphérique (« coating ») ou une enveloppe. La marque détrompeuse constitue ainsi un moyen fiable pour différencier les faces amont et aval.

Une structure en nid d'abeille selon l'invention présente encore des avantages spécifiques dans le cadre de la fabrication d'un corps filtrant assemblé.

De préférence, la marque détrompeuse ne résulte pas de la seule modification du périmètre extérieur d'un bloc filtrant unitaire du corps filtrant assemblé. Elle ne risque donc pas d'être masquée lors de l'opération d'assemblage par l'application du ciment de joint. Lors du collage des blocs filtrants unitaires, toutes les faces d'entrée des blocs filtrants unitaires doivent être disposées du même côté. La marque détrompeuse permet de limiter efficacement le risque d'erreur de positionnement.

Dans un mode de réalisation, la marque détrompeuse est conformée pour permettre également une identification d'une région particulière de la structure en nid d'abeille, par exemple une ou plusieurs faces d'un bloc filtrant unitaire. Ce mode de réalisation est notamment utile lorsque le bloc filtrant unitaire doit être orienté non seulement suivant la direction longitudinale, mais aussi suivant une autre direction. Par exemple parce qu'une face latérale déterminée du bloc filtrant unitaire doit être identifiée pour être collée à une autre face latérale déterminée d'un autre bloc filtrant unitaire, ou parce qu'il est nécessaire de distinguer les seules zones de la surface latérale du bloc filtrant unitaire qui doivent être encollées. Dans ce mode de réalisation, la marque détrompeuse permet d'identifier une position angulaire autour de l'axe longitudinal.

De préférence, lors de l'assemblage des blocs filtrants unitaires, des masques transparents sont appliqués sur les faces amont et aval de ces blocs afin d'éviter le colmatage des canaux par le ciment de joint tout en permettant l'observation de la marque détrompeuse.

Comme cela apparaît clairement à présent, une structure en nid d'abeille selon l'invention présente une marque détrompeuse qui, dans une application à un corps filtrant, ne disparaît pas à l'utilisation. Les opérations de nettoyage externe, notamment afin d'évacuer, en partie ou complètement, des cendres résiduelles, et de recyclage en sont facilitées.

En outre, dans un mode de réalisation préféré, la marque détrompeuse reste visible en cas d'application d'un ciment de joint ou d'un revêtement périphérique sur la surface latérale du corps filtrant, ou en cas d'intégration du corps filtrant dans une enveloppe, notamment pour le montage sur la ligne d'échappement d'un véhicule automobile.

Bien entendu, la présente invention n'est pas limitée aux modes de réalisation décrits, fournis à titre d'exemples. En particulier, les canaux ne présentent pas nécessairement une section transversale carrée.

Dans d'autres modes de réalisation, les canaux d'entrée et les canaux de sortie adjacents ne sont pas agencés les uns par rapport aux autres de manière que l'intégralité du gaz filtré par un canal d'entrée quelconque passe dans des canaux de sortie adjacents audit canal d'entrée.

## Revendications

1. Structure en nid d'abeille (3 ; 11) comprenant un ensemble de canaux adjacents, chaque canal débouchant par des ouvertures amont (32e) et aval (32s) sur des faces amont (26e) et aval (26s), respectivement, de manière que ledit ensemble de canaux forme des motifs amont et aval sur lesdites faces amont et aval, respectivement, **caractérisée en ce qu'**au moins une des faces amont et aval porte une marque détrompeuse (M) s'étendant sur moins de 50 canaux et rendant impossible une superposition complète de l'un quelconque des motifs amont et aval sur l'autre, le périmètre extérieur du motif amont et/ou aval étant symétrique ou présentant une asymétrie s'étendant sur moins de 10 canaux.

2. Structure en nid d'abeille selon la revendication précédente, dans laquelle au moins un des motifs amont et aval ne présente pas d'axe de symétrie.

3. Structure en nid d'abeille selon l'une quelconque des revendications précédentes, dans laquelle la marque détrompeuse (M) s'étend sur moins de 10 canaux.

4. Structure en nid d'abeille selon l'une quelconque des revendications précédentes, dans laquelle la marque détrompeuse s'étend en périphérie de la structure en nid d'abeille.

5. Structure en nid d'abeille selon l'une quelconque des revendications précédentes, dans laquelle la marque détrompeuse résulte d'une conformation particulière d'une ou plusieurs des ouvertures des canaux.

6. Structure en nid d'abeille selon l'une quelconque des revendications précédentes, dans laquelle le canal ou les canaux formant la marque détrompeuse présente(nt),
- un facteur de forme différant d'au moins 5% de la moyenne des facteurs de forme des autres canaux ; et/ou
- au niveau de la face amont et/ou aval, une épaisseur moyenne de paroi qui diffère d'au moins 10% de l'épaisseur moyenne des autres canaux ; et/ou
- au niveau de la face amont et/ou aval, une surface moyenne d'ouverture qui diffère d'au moins 10% de la surface moyenne des ouvertures des autres canaux ; et/ou
- au niveau de la face amont et/ou aval, une asymétrie distinctive.

7. Structure en nid d'abeille selon l'une quelconque des revendications précédentes, ladite structure en nid d'abeille présentant une surface latérale (13), la marque détrompeuse n'étant pas exclusivement ménagée sur ladite surface latérale.

8. Structure en nid d'abeille selon l'une quelconque des revendications précédentes, comportant un matériau fritté et présentant une forme extérieure présentant au moins un plan de symétrie longitudinal.

9. Structure en nid d'abeille selon l'une quelconque des revendications précédentes, présentant une forme extérieure cylindrique de section transversale carrée, la largeur de ladite section étant supérieure à 30 mm et inférieure à 100 mm.

10. Structure en nid d'abeille selon l'une quelconque des revendications précédentes, comportant des ensembles imbriqués de premiers canaux et de deuxièmes canaux adjacents et disposés en alternance de manière à former, en section transversale, un motif en damier, dans laquelle :
- le rapport r du volume total cumulé Ve des premiers canaux sur le volume total cumulé Vs des deuxièmes canaux est supérieur à 1,03 et inférieur à 3,0 ; et/ou
- le rapport r' de la surface intérieure totale cumulée des premiers canaux sur la surface intérieure totale cumulée des deuxièmes canaux est supérieur à 1,03 et inférieur à 3,0.

11. Structure en nid d'abeille selon l'une quelconque des revendications précédentes, dans laquelle les parois des canaux sont concaves du côté des premiers canaux et convexes du côté des deuxième canaux.

12. Structure en nid d'abeille selon la revendication précédente, dans laquelle, dans n'importe quelle section transversale, chaque paroi intermédiaire séparant deux lignes ou deux colonnes de canaux présente une forme ondulée, le degré d'asymétrie, mesuré sur dans ladite section transversale, étant inférieur à 30%.

13. Structure en nid d'abeille selon l'une quelconque des revendications précédentes, présentant une forme extérieure cylindrique de section transversale polygonale et tel que, sur au moins une des faces latérales de ladite structure en nid d'abeille, le nombre de canaux périphériques est impair.

14. Procédé comportant une étape de positionnement d'une structure en nid d'abeille selon l'une quelconque des revendications précédentes, choisi parmi :
- un procédé de bouchage de canaux de ladite structure en nid d'abeille,
- un procédé de nettoyage de ladite structure en nid d'abeille afin d'évacuer, en partie ou complètement, des cendres résiduelles ;
- un procédé d'application d'un revêtement catalytique sur ladite structure en nid d'abeille,
- un procédé d'application d'un revêtement périphérique, notamment en un ciment de revêtement isolant thermiquement et étanche aux gaz d'échappement ;
- un procédé de montage d'un corps filtrant comportant ladite structure en nid d'abeille dans une ligne d'échappement d'un véhicule automobile ou dans une enveloppe d'un corps filtrant destiné à une telle ligne d'échappement,
- un procédé d'assemblage d'une pluralité de blocs filtrants unitaires, au moins un desdits blocs filtrants unitaires comportant ladite structure en nid d'abeille, de manière à constituer un corps filtrant assemblé,
procédé selon lequel on identifie les faces d'entrée et/ou de sortie par observation de la marque détrompeuse de ladite structure en nid d'abeille et on positionne ladite structure en nid d'abeille en fonction de ladite identification.

15. Dispositif choisi parmi un échangeur de chaleur, un bloc filtrant unitaire, un corps filtrant assemblé et un corps filtrant monolithique, **caractérisé en ce qu'**il comporte au moins une structure en nid d'abeille frittée et conforme à l'une quelconque des revendications 1 à 13.

## Claims

1. A honeycomb structure (3; 11) comprising a set of adjacent channels, each channel emerging via upstream (32e) and downstream (32s) openings on upstream (26e) and downstream (26s) faces, respectively, so that said set of channels forms upstream and downstream patterns on said upstream and downstream faces, respectively, **characterized in that** at least one of the upstream and downstream faces bears an error-proofing mark (M) extending over fewer than 50 channels and making it impossible for any of the upstream and downstream patterns to be completely superimposed one on the other, the outer perimeter of the upstream and/or downstream pattern being symmetrical or having an asymmetry extending over fewer than 1 0 channels.

2. The honeycomb structure as claimed in the preceding claim, in which at least one of the upstream and downstream patterns has no axis of symmetry.

3. The honeycomb structure as claimed in either of the preceding claims, in which the error-proofing mark (M) extends over fewer than 10 channels.

4. The honeycomb structure as claimed in any one of the preceding claims, in which the error-proofing mark extends on to the periphery of the honeycomb structure.

5. The honeycomb structure as claimed in any one of the preceding claims, in which the error-proofing mark results from a particular conformation of one or more of the openings of the channels.

6. The honeycomb structure as claimed in any one of the preceding claims, in which the channel or channels forming the error-proofing mark has or have:
- aspect ratio differing by at least 5% from the average of the aspect ratios of the other channels; and/or
- at the upstream and/or downstream face, an average wall thickness that differs by at least 10% from the average thickness of the other channels; and/or
- at the upstream and/or downstream face, an average opening area that differs by at least 10% from the average area of the openings of the other channel; and/or
- at the upstream and/or downstream face, a distinctive asymmetry.

7. The honeycomb structure as claimed in any one of the preceding claims, said honeycomb structure having a lateral surface (13) and the error-proofing mark not being exclusively provided on said lateral surface.

8. The honeycomb structure as claimed in any one of the preceding claims, comprising a sintered material and having an external shape with at least one plane of longitudinal symmetry.

9. The honeycomb structure as claimed in any one of the preceding claims, having a cylindrical external shape of square cross section, the width of said section being greater than 30 mm but less than 100 mm.

10. The honeycomb structure as claimed in any one of the preceding claims, comprising imbricated sets of first and second adjacent channels, arranged alternately so as to form, in cross section, a checkerboard pattern, in which:
- the ratio r of the cumulative total volume Ve of the first channels to the cumulative total volume Vs of the a second channels is greater than 1.03 but less than 3.0; and/or
- the ratio r' of the cumulative total internal area of the first channels to the cumulative total internal area of the second channels is greater than 1.03 but less than 3.0.

11. the honeycomb structure as claimed in any one of the preceding claims, in which the walls of the channels are concave on the side with the first channels and convex on the side with the second channels.

12. The honeycomb structure as claimed in the preceding claim, in which, in any cross section, each intermediate wall separating two rows or two columns of channels has an undulating shape, the degree of asymmetry, measured on in said cross section, being less than 30%.

13. The honeycomb structure as claimed in any one of the preceding claims, having a cylindrical external shape of polygonal cross section and such that, on at least one of the lateral faces of said honeycomb structure, the number of peripheral channels is odd.

14. A method comprising a step of positioning a honeycomb structure as claimed in any one of the preceding claims, chosen from:
- a method of plugging the channels of said honeycomb structure;
- a method of cleaning said honeycomb structure so as to remove, partly or completely, residual ash;
- a method of applying a catalytic coating on said honeycomb structure;
- a method of applying a peripheral coating, especially made of a thermally insulating coating cement which is impermeable to the exhaust gas;
- a method of mounting a filter body comprising said honeycomb structure in an exhaust line of an automobile or in a casing of a filter body intended for such an exhaust line;
- a method of assembling a plurality of unitary filter blocks, at least one of said unitary filter blocks comprising said honeycomb structure, so as to constitute an assembled filter body,
in which method the entry and/or exit faces are identified by observing the error-proofing mark on said honeycomb structure and positioning said honeycomb structure according to said identification.

15. A device chosen from a heat exchanger, a unitary filter block, an assembled filter body and a monolithic filter body, **characterized in that** it comprises at least one sintered honeycomb structure in accordance with any one of claims 1 to 13.

## Patentansprüche

1. Wabenstruktur (3; 11) bestehend aus einer Gesamtheit benachbarter Kanäle, wobei jeder Kanal sich durch stromaufwärtige (32e) und stromabwärtige (32s) Öffnungen auf jeweils stromaufwärtige (26e) und stromabwärtige (26s) Stirnflächen öffnet, derart, dass die Gesamtheit der Kanäle stromaufwärtige und stromabwärtige Muster bildet, **dadurch gekennzeichnet, dass** wenigstens eine der stromaufwärtigen bzw. stromabwärtigen Stirnflächen eine Eindeutigkeitsmarkierung (M) trägt, die sich über weniger als 50 Kanäle erstreckt, die eine vollständige Überdeckung eines der stromaufwärtigen bzw. stromabwärtigen Muster mit dem anderen unmöglich macht, wobei der äussere Umfang des stromaufwärtigen und/oder stromabwärtigen Musters symmetrisch ist oder eine sich über weniger als 10 Kanäle erstreckende Asymmetrie zeigt.

2. Wabenstruktur nach dem vorhergehenden Anspruch, in welcher wenigstens eines der stromaufwärtigen bzw. stromabwärtigen Muster keine Symmetrieachse zeigt.

3. Wabenstruktur nach einem der vorhergehenden Ansprüche, in welcher die Eindeutigkeitsmarkierung (M) sich über weniger als 10 Kanäle erstreckt.

4. Wabenstruktur nach einem der vorhergehenden Ansprüche, in welcher die Eindeutigkeitsmarkierung sich in die Peripherie der Wabenstruktur erstreckt.

5. Wabenstruktur nach einem der vorhergehenden Ansprüche, in welcher die Eindeutigkeitsmarkierung sich aus einem besonderen Aufbau eines oder mehrerer Kanalöffnungen ergibt.

6. Wabenstruktur nach einem der vorhergehenden Ansprüche, in welcher der Kanal oder die Kanäle, die die Eindeutigkeitsmarkierung bilden, aufweisen,
- einen Formfaktor, der verschieden ist zu wenigstens 5% des Formfaktormittels der anderen Kanäle; und/oder
- auf dem Niveau der stromaufwärtigen und/oder stromabwärtigen Stirnfläche eine mittlere Wanddicke, die sich zu wenigstens 10% von der mittleren Dicke der anderen Kanäle unterscheidet; und/oder
- auf dem Niveau der stromaufwärtigen und/oder stromabwärtigen Stirnfläche eine mittlere Öffnungsfläche, die sich zu wenigstens 10% von der mittleren Fläche der Öffnungen der anderen Kanäle unterscheidet; und/oder
- auf dem Niveau der stromaufwärtigen und/oder stromabwärtigen Stirnfläche eine unterschiedliche Asymmetrie.

7. Wabenstruktur nach einem der vorhergehenden Ansprüche, wobei die Wabenstruktur eine Seitenfläche (13) aufweist, und die Eindeutigkeitsmarkierung nicht ausschließlich auf besagter Seitenfläche angelegt ist.

8. Wabenstruktur nach einem der vorhergehenden Ansprüche, welche ein gesinteres Material aufweist und eine äussere Form, welche mindestens eine longitudinale Symmetrieebene aufweist.

9. Wabenstruktur nach einem der vorhergehenden Ansprüche, welche eine zylindrische äussere Form aufweist mit quadratischem Querschnitt, wobei die die Breite besagten Querschnitts größer als 30 mm und kleiner als 100 mm beträgt.

10. Wabenstruktur nach einem der vorhergehenden Ansprüche, welche sich überschneidende Gesamtheiten von ersten und zweiten benachbarten Kanälen aufweist, die in alternierender Weise verteilt sind, um im Querschnitt ein Schachbrettmuster zu bilden, in welchem:
- das Verhältnis r des totalen kumulierten Volumens Ve der ersten Kanälen zum totalen kumulierten Volumen Vs der zweiten Kanäle größer als 1,03 und kleiner als 3,0 ist; und/oder
- das Verhältnis r' der gesamten kumulierten inneren Oberfläche der ersten Kanäle zur gesamten kumulierten inneren Oberfläche der zweiten Kanäle größer als 1,03 und kleiner als 3,0 ist.

11. Wabenstruktur nach einem der vorhergehenden Ansprüche, in welcher die Kanalwände zur Seite der ersten Kanäle konkav und zur Seite der zweiten Kanäle konvex sind.

12. Wabenstruktur nach dem vorhergehenden Anspruch, in welcher unabhängig vom Querschnitt jede Zwischenwand, die zwei Linien oder zwei Kolonnen von Kanälen voneinander trennt, eine Wellenform zeigt und der Asymmetriegrad, welcher in besagtem Querschnitt gemessen wird, kleiner als 30% ist.

13. Wabenstruktur nach einem der vorhergehenden Ansprüche, welche eine zylindrische äussere Form mit polygonalem Querschnitt aufweist, derart, dass auf wenigstens einer Seitenfläche der Wabenstruktur die Zahl der peripheren Kanäle ungerade ist.

14. Verfahren, welches einen Verfahrensschritt der Positionierung einer Wabenstruktur nach einem der vorhergehenden Ansprüche aufweist, das ausgewählt ist aus:
- ein Verfahren zum Verstopfen der Kanäle der Wabenstruktur,
- ein Verfahren zum Reinigen der Wabenstruktur, um zum Teil oder komplett residuelle Überreste zu entfernen;
- ein Verfahren zum Aufbringen einer katalytischen Auskleidung auf der Wabenstruktur,
- ein Verfahren zum Aufbringen einer peripheren Auskleidung insbesondere mit einem thermisch isolierenden Auskleidungszement welcher, undurchlässig für Auspuffgase ist;
- ein Verfahren zur Montage eines Filterkörpers mit der Wabenstruktur in der Auspuffanlage eines Automobils oder in einem Filterkörpergehäuse, der für eine solche Auspuffanlage bestimmt ist,
- ein Verfahren zum Zusammenbau einer Mehrzahl von Einzelfilterblocks, wobei mindestens einer dieser Einzelfilterblocks die Wabenstruktur aufweist, um einen zusammengesetzten Filterkörper zu erzeugen,
ein Verfahren, nach dem man die Eingangs- und/oder Ausgangstirnflächen durch Beobachtung der Eindeutigkeitsmarkierung der Wabenstruktur identifiziert und man die Wabenstruktur in Funktion dieser Identifikation positioniert.

15. Vorrichtung ausgewählt aus einem Wärmetauscher, einem Einzelfilterblock, einem zusammengesetzten Filterkörper und einem monolithischen Filterkörper, **dadurch gekennzeichnet, dass** sie zumindest eine Wabenstruktur, aufweist, die gesintert ist und mit einem der Ansprüche 1 bis 13 konform ist.
